# EUROPEAN PATENT SPECIFICATION

(11) **EP 2 928 592 B1**
(45) Date of publication and mention of the grant of the patent: **04.04.2018**
(21) Application number: 13831971.0
(22) Date of filing: 07.12.2013
(51) Int. Cl.: B01F 5/10, C10G 11/16, C10G 15/08, F04D 25/04, B01J 19/00, B01J 19/18

(54) **A REACTION PUMP FOR HYDROCARBON CONVERSION**
REAKTIONSPUMPE FÜR DIE UMWANDLUNG VON KOHLENWASSERSTOFFEN
POMPE À RÉACTION POUR LA CONVERSION D'HYDROCARBURES

(30) Priority: 07.12.2012 GB 201222043
(43) Date of publication of application: 14.10.2015
(73) Proprietor: Ecofuel Technologies Ltd, J3203 Malta (MT)
(72) Inventor: GUENTHER, Thomas Andreas, E-07181 Portals Nous (ES)
(74) Representative: Linsmeier, Josef
(86) International application number: PCT/IB2013/002999
(87) International publication number: WO 2014/087238

(56) References cited:
- EP-A2- 1 134 424
- US-A- 5 088 891
- US-A1- 2010 260 008
- US-A1- 2011 046 322
- US-A1- 2012 309 912

## Description

### Field

This invention relates to a reaction pump for conversion of hydrocarbons, in particular the invention relates to a reaction pump having a mixing and heating element housed in a reaction chamber which is adapted for use at converting hydrocarbons at temperatures in excess from around 250°C to 360°C, typically referred to as low temperature conversion.

### Background

Various methods are known in which cleavage of hydrocarbon chains is achieved using catalysts under low pressure and temperatures between 250°C to 400°C.

These methods, which differ from pyrolysis in that they operate at lower temperature and pressure levels, are mostly based in respect of the relevant chemical reaction on the principle developed in the 1980's at the University of Tübingen by Prof. Dr. Ernst Bayer: and known as the so-called low-pressure thermal conversion process (NTK = Nieder-Temperatur-Konvertierung). This low-pressure thermal conversion process is described in European Patent Application EP-A-0 052 334 (Ernst Bayer).

The process claimed produces fuels from organic material feedstock, typically provided in liquid, granular or powder form at temperatures between 250°C and 400°C under exclusion of air, whereby the emerging gases and vapours escaping as a result of the reaction are conducted through a condenser to be liquefied and to be than collected in a product tank.

The conversion temperature is maintained until the development of gases and vapours has substantially ceased.

The solid conversion residues are separated in this reaction. The method uses a reactor heated from outside and a catalyst mixed into the material at conversion temperatures of between 250°C to 400°C.

The attempt to transfer these basic principles into an economically viable conversion system led to different approaches regarding technical implementation. In various implementations, over a limited period of time, a high proportion of the hydrocarbon chains can be split and converted into liquid fuel, whether by way of an outside heater, or by a mechanical movement core, such as a heated reaction chamber. However, none of the known methods takes into consideration any cost-benefit calculation appropriate for economically viable operation in industrial scale.

### Prior Art

The method described in DE-A1-10 2009 012 486 (Koch) discloses how necessary heat is obtained by mechanical friction of a process fluid or liquid in various pumps and mixers, as well as in a mixer chamber. This arrangement aims to overcome maintenance-intensive coking on an inner side of the outside heated vessel wall.

Trials with the described type of mixer chamber and using this method have shown that several technical implementations are still not appropriate for economically rational operation on an industrial scale.

US Patent Application US-A-2007/0131585 (Koch) discloses a system for the method of production of diesel oil from a hydrocarbon-containing residue in an oil circulation circuit that separates solids and product distillation. The system employs a high-speed mixer chamber and uses crystallized catalysts including: potassium-, sodium-, calcium- and magnesium-aluminium silicates. Energy input and conversion occur mainly in the high-speed mixer chamber.

However, a disadvantage of these systems has been the durability of the high-speed mixer chamber, whose impeller shaft bearings only obtain a service life time of 30 to 250 hours. Clearly in the former case of 30 hours or so, this was not practical or viable. In addition, leakage and air tightness of the seals between housing and impeller shaft has not been able to be reliably controlled.

For these reasons, and due to the costs for commissioning and shutting down of a plant, and the fact that the high-speed mixer chamber was located in a position which was not easily accessible, an economically viable implementation of this type of thermal catalytic conversion method has not been achieved.

WO-A2-2010/063248 (Koch) describes a method and an apparatus for the catalytic conversion of hydrocarbon-containing residues in two stages. In the first stage at 120°C to 200°C, there is heating by the waste heat of the power generator in order to convert the solid input materials into a reaction slurry. In the second stage, there is conversion of the slurry into a middle distillate by way of a one, or more, high-speed mixer chambers, which have a design that is based on the principle of a liquid ring vacuum pump but equipped with hydraulic gaskets.

Due to the nature of this process, the use of the liquid ring vacuum pump principle in this hydrocarbon conversion process leads to multiplied physical stresses because, liquids, solids, abrasive catalysts and acid regulators are moved at high temperatures (instead of air and gases at ambient temperature).

The life expectation of the previously built mixing devices was too limited as none of the designs was able to avoid the abrasive process fluid or liquid entering into the shaft bearings. Tests have shown that the lifetime for such reaction pumps, modified for this process with shaft bearings assembled as standard inside the liquid and gas flow area, was anything from 30 hours to at best 250 hours.

In addition, the assumption that the high oil content of the process liquid would ensure at least sufficient lubrication of the shaft bearings has not been confirmed in tests. The reason for the excessive wear has been the presence of aluminosilicates and other catalysts necessary in the process, as well as lime based acidity regulators. Both were determined as being highly abrasive and highly damaging for the bearings. A previously described attempt to isolate shaft bearings with hydraulic seals (centrifugal seals) from the process fluid or liquid area reduced the amount of fluid passing through the bearings, but did not prevent it.

With any arrangement of the shaft bearings located within the process liquid flow range, transported solid particles which pass into the bearings inevitably led to lubrication problems. In particular, catalytic components and acidity regulating additives led to rapid damage of the bearings. In addition ingress of dirt, sand and smaller stones, inevitably introduced with the raw materials used for feedstock for the hydrocarbon conversion, also led to damage to the bearings.

Another requirement of the system has been to ensure that no air leaks into the system or is involved in the process; otherwise the desired anaerobic conditions for the catalytic conversion processes are not achieved.

US 2012/0309912 A1 relates to a stirred tank polymerization reactor system having a reactor tank, a stirring assembly including a rotatable shaft that extends through a wall of the tank, and a triple barrier mechanical seal including an outer cylinder mounted in the wall of the tank, an inner cylinder that is rotatable relative to the outer cylinder and connected to the shaft, and first, second, and third fluid barrier seals mounted between the outer and inner cylinders at different positions along the axis of rotation of the inner cylinder. The barrier seals step down the differential pressure experienced by the uppermost barrier seals in order to reduce mechanical stresses experienced by the annular sealing rings and seats.

US 5 088 891 A1 relates to a pump for high temperature fluid with a drive end seal comprising rubbing sealing surfaces biased together by springs and having cooling means to keep the seal temperature within its recommended range.

The present invention aims to address these problems and seeks to provide improvements upon the known devices and methods.

### Summary of Invention

According to the invention there is provided a reaction pump for thermal conversion of hydrocarbons, comprising: a housing; a reaction chamber enclosed by the housing, for containment of a hydrocarbon process fluid or liquid reactant; a mixing element, which in use is disposed inside the reaction chamber for transferring energy to the fluid reactant, the mixing element coupled to a rotatable shaft; at least one bearing receiving the shaft, the or each, bearing being disposed outside the reaction chamber; a barrier means, disposed between the reaction chamber and the at least one bearing, for fluidically separating the reactant from the at least one bearing, wherein the barrier means comprises a seal protection chamber disposed between the reaction chamber and the at least one bearing, wherein the seal protection chamber contains a liquid which is in fluid communication with the reaction chamber.

An advantage of the invention is therefore that the barrier means provides protection for the bearing(s) from the reactant in the reaction chamber, allowing a far more durable reaction pump than previously considered examples, whilst also ensuring an airtight or near airtight seal. This is particularly the case at steady state where there is no back flow of oil across the volume enclosed by the barrier means. Another advantage is that heating is achieved by the mixing element by converting kinetic energy into shearing forces and so achieving heating of the reactants. Another benefit is that the turbulence achieved in the reaction chamber of the reaction pump, helps to maintain the components and impeller clean and free of build-up from reaction products.

A further advantage of the seal protection chamber is that it contains a liquid which is in fluid communication with the reaction chamber and so it offers the facility to introduce liquid catalysts from outside the reaction pump directly into the reaction chamber.

The reaction pump is ideally adapted to process a slurry in a temperature range between 260°C and 360°C.

To seal the shaft against the housing, previously presented devices have been equipped with packing seals. However, in this temperature regime it was not practical to use packing seals to seal the shaft because of leakage caused by thermal expansion and contraction. In order to function properly, packing seals have needed to be adjusted to a certain tolerated leakage of liquid for lubrication. Where ambient conditions exceed 300°C, leaking oil evaporated the moment it entered the atmosphere. This was dangerous due to risk of spontaneous combustion as well as the vapours posing a hazard to health. Therefore packing seals were not capable of sealing prior art rotating shafts supporting lower pressure reactors where anaerobic conditions were required. The present invention overcomes this by the unique combination of providing one or more sets of bearings outside the reaction chamber; and a barrier means disposed between the reaction chamber and the at least one bearing, so fluidically separating the reactant from the at least one bearing and in effect isolating the reactant and catalyst from the bearings.

Currently sliding ring seals are preferred for devices operating at higher temperatures. For temperatures above about 270°C, sliding ring seals have to be equipped with a metal bellow to compensate axial shaft extension. For the best sealing effect the metal bellows have to be located on the process liquid side, having contact with the pressurized process liquid. However, metal bellows can be used only up to a certain viscosity of process fluid or liquid. If the viscosity exceeds this limit and/or high proportion of debris and solids are present in the process slurry, the metal bellows become clogged, do not work properly and eventually fail.

In the aforementioned process both the viscosity of the processed fluid and the amount of solids moved in the slurry are relatively high and would not enable the use of metal bellow sliding ring seals. Due to the arrangement of seal bearings and the presence of a barrier means intermediate the seal bearings, seals and the reaction chamber, in the present invention, the aforementioned problem associated with metal bellows in prior art systems are also avoided.

The reaction pump has bearings which are located outside the reaction chamber. One or more bearings are provided, but ideally at least two or three sets of bearings ensure that smooth running of the mixing element in the reaction chamber occurs.

Ideally the seal protection chamber comprises inlet and outlet channels for circulating liquid in the seal protection chamber.

The seal protection chamber contains a liquid. A separate, independent lubricant and/or coolant circuit may be provided for the seal protection chamber.

Optionally a pressuriser, such as a pump or supply of compressed fluid, is provided to vary the liquid pressure within the seal protection chamber. This achieves a slight over pressurising of the liquid and thus ensures there is no leakage from the reaction chamber into the seal protection chamber.

Ideally at steady state there is no back flow as pressures are balanced in adjacent sub-chambers.

An advantage of this is that abrasive catalytic material and debris do not pass from the reaction vessel into a delicate bearing or into a bellows that might otherwise silt up and be damaged when this arrangement expands and contracts. A pressure vessel or pump may be employed to carry out pressure balancing.

Preferably, the seal protection chamber is disposed between the reaction chamber and the closest bearing. This arrangement is adopted where several sets of bearing are provided, it being understood that only the bearing nearest the reaction chamber requires the seal protection chamber; the remaining bearings may be simply freely supported in the conventional manner.

In a particularly preferred embodiment of the invention, the seal protection chamber comprises inlet and outlet channels for circulating liquid in the seal protection chamber. Preferably, the liquid pressure maintained within the seal protection chamber is substantially the same as the pressure within the reaction chamber.

The barrier means further comprises a sealing device. The sealing device is disposed between the seal protection chamber and the closest bearing to the reaction chamber whereby the seal protection chamber is configured to maintain two fluid systems independent one from another - that is fluidically separate - the reactant from the sealing device. The sealing device is a sliding ring seal enclosing the shaft.

In another embodiment the sliding ring seal is housed in a seal chamber. Preferably, the seal chamber comprises inlet and outlet channels for circulating lubricant in the seal chamber.

More preferably, the lubricant is also a coolant and acts as such for example by passing through a heat exchanger or other forced cooler. Suitably lubricant pressure maintained within the seal chamber and is at a pressure that is slightly higher than the pressure within the reaction chamber.

In one embodiment, the barrier means comprises two sealing devices, the first disposed at an inner position adjacent the seal protection chamber and the second disposed at an outer position.

In another embodiment the barrier means comprises a throttle enclosing the shaft, the throttle being disposed between the seal protection chamber and the reaction chamber.

In another particularly preferred embodiment the reaction chamber is divided into two sub-chambers, wherein the first sub-chamber includes an inlet for receiving reactant entering the device, and wherein the second sub-chamber includes an outlet for expelling processed reactant. Reactant may have been pre-mixed or pre-processed before it is pumped into the reaction chamber.

Preferably the reaction chamber is divided by an annular rib originating at a perimeter of the chamber and extends therefrom to an edge of the mixing element. Ideally the reaction chamber is divided into the two sub-chambers by the annular rib originating at a perimeter of the reaction chamber and extending therefrom to an edge of the mixing element.

Preferably the rib is of varying thickness and is eccentrically disposed around an inner wall of the chamber. This means that, in use, the rib is thicker around an upper portion of the chamber and thinner at a lower portion of the chamber. An advantage of this is that as the mixing element rotates, it acts as an impeller and so rotatably forces reactant from an inlet of the reaction pump, through the reaction chambers to an outlet.

Preferably therefore in this configuration the impeller and reaction chamber may be envisaged as operating in a similar manner as a liquid-ring pump. It is this configuration of varying pressure zones, elevated temperatures, catalytic conditions and intensive mixing and shearing which together promote the optimum conditions for the hydrocarbon conversion reaction to occur.

In one particularly preferred embodiment liquid, or gaseous, catalyst may be introduced into the reaction chamber, under pressure, at or near the aforementioned annular rib, or even through the actual material defining the rib. Such direct introduction of catalyst into the reaction chamber has several advantages. This direct introduction of catalyst results in the introduction of catalyst at the precise location where optimum reactions conditions are present; it introduces catalyst into highly turbulent regions of the reaction chamber - so aiding prompt mixing and distribution of the catalyst; and it reduces the amount of catalyst that is needed, so reducing operating costs. Alternatively catalyst may be introduced via an additional chamber.

In a further alternative arrangement the housing of the reaction pump may be fitted with a dedicated bore or conduit for the introduction of one or more catalysts or additives at desired instants, at the desired moment so as to promote optimum reaction conditions. Such features ensure against premature catalyst reactions and promote efficient use of catalyst, which is likely to result in cheaper operation of the pump and the associated system, as some catalysts can be expensive.

Suitably, the impeller is drivable to decrease input pressure in the reaction chamber sufficient to aspire reactant to the inlet from a fluid pre-processing unit, and to increase output pressure sufficient to pump reactant from the outlet to a fluid post-processing unit.

In another embodiment, the at least one closest bearing to the reaction chamber, is lubricated by a lubricant, which lubricant is fluidically separated from the reactant by the barrier means. The lubricant may be oil or grease or a mixture of these, for example.

Preferably, the reaction chamber is generally cylindrical and the shaft passes through a second seal located in a second end wall of the chamber.

The, or each, seal includes a means to accommodate thermal expansion of the shaft. The means to accommodate thermal expansion of the shaft includes a bellows seal that, in use, surrounds the shaft.

Preferably, a cover arranged to direct fluid flow, such as cowl or barrier, encases the means to accommodate thermal expansion of the shaft thereby defining a cowl chamber within the reaction chamber thereby isolating the means to accommodate thermal expansion of the shaft from the main body of the chamber.

In a further embodiment, a fluid is supplied under positive pressure to the interior of the cowl chamber. The fluid pressure is ideally slightly higher than the pressure inside the reaction chamber

In an embodiment, the fluid passes through a heat exchanger external to the reaction chamber in order to modify the viscosity of the fluid.

In any of the aforementioned embodiments the mixer is an impeller and includes at least two blades, preferably between six and thirty blades, more preferably between twelve and twenty blades, and most preferably sixteen blades and the impeller is supported on a shaft.

Preferably, a blade is between 100mm and 1000mm, preferably between 300mm and 500mm and most preferably 400mm in length, between 30mm and 400mm, preferably between 100mm and 200mm and most preferably 130mm in width, defined from the surface of the shaft to a blade tip and between 3mm and 60mm, preferably 10mm thick.

In another embodiment, operation of the impeller is driven by a drive to angular speeds of between 300 revolutions per minute (RPM) and 5000RPM, preferably between 800RPM and 1200RPM and most preferably 1000RPM.

In still another embodiment, operation of the impeller creates one or more zones of varying pressure between -0.9 bar and 0.0 bar, preferably between -0.5 and - 0.3 bar.

Various aspects and embodiments may be combined to provide further aspects and embodiments of the invention. It is understood that certain design features or such as the chamber being maintained in an anaerobic environment, provide optimum conditions, for conversion of hydrocarbons.

Where it is desired to increase throughput, economies of scale may be used by employing a modular system of reaction pumps sharing a common feedstock and ancillary pumps, storage hoppers, distillation columns, condensers and post-processing equipment. Valves may be employed to switch one or more pumps in and out of line as and when needed.

### Brief description of the drawings

The invention will now be described by way of example with reference to the accompanying drawings, in which:
Figure 1 a is a diagram illustrating a reaction pump according to one embodiment of the invention;
Figure 1b is a diagram illustrating another embodiment of the invention and shows a reaction pump with a shaft supported from one side only;
Figure 1c is a part exploded view of the reaction pump of Figure 1 a and shows an additional seal protection chamber highlighted;
Figure 2 is a flow diagram illustrating key stages in a hydrocarbon processing system that incorporates the reaction pump of the type shown in Figures 1a or 1b;
Figure 3 is an overall view of the system corresponding generally to that shown in Figure 2 and shows key components and stages of a hydrocarbon conversion process and the direction of flow of reactant; and
Figure 4 is a diagrammatic representation of a carousel valve system in which any number of reaction pumps (1 to 8) may be incorporated as part of a modular arrangement in the system of Figure 2 or 3.

### Detailed Description of Preferred Embodiments of the Invention

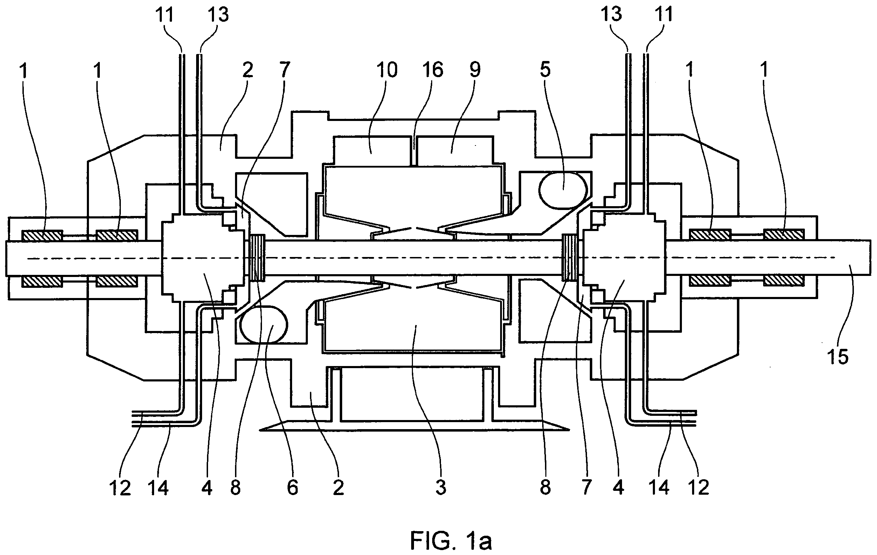

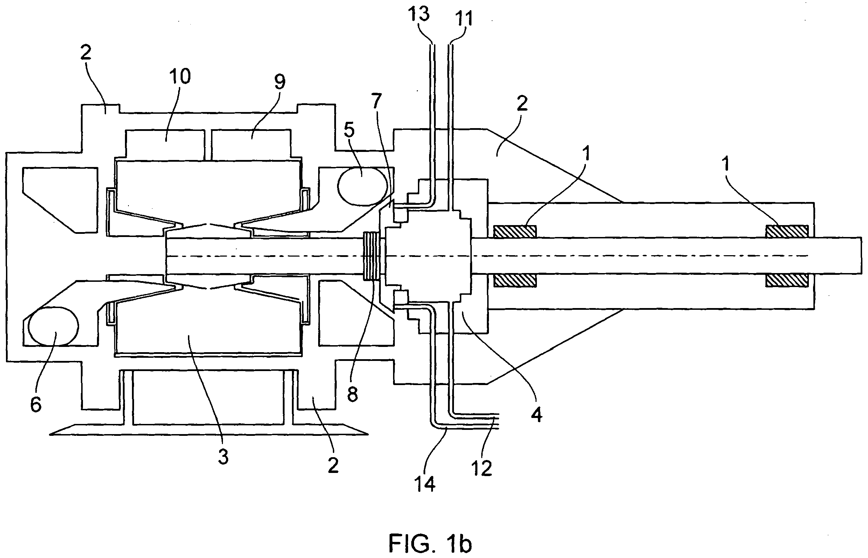

Embodiments of the invention are described below with particular reference to Figures 1a and 1b which show a reaction pump for continuous production of gaseous and liquid fuels by conversion of biomass and other hydrocarbonaceous materials.

The below described new reaction pump design provides a pollution-free mounting position and enables lubrication of the shaft bearings with clean and adequate lubricants. Embodiments of the invention include a housing design with shaft bearings located outside of a processing zone and away from fluid flow areas, and optionally also includes features protecting the bearings from the process fluid or liquid.

A prototype of a reaction pump according to an embodiment of the invention showing a design with exterior located duplicated bearings, appropriately lubricated, has been in continuous use under constant operating conditions for over nine months, without showing excessive bearing wear.

As noted above, previously used sealing methods are not sufficient, since the shaft leaking probability is high, and at temperatures above around 300°C or more particularly above 350°C the leaking oil evaporates into the atmosphere without being collected at the same time air tightness was not sufficient.

For this reason the newly designed inner side of the reaction pump housing as described in more detail below has in the area of the shaft seals special partition walls and shaft surrounding throttle pipes to form additional seal protection chambers that enable the use of sliding ring seals, which can be kept at temperatures below that of the reaction pump, and can incorporate metal bellows to allow thermal expansion.

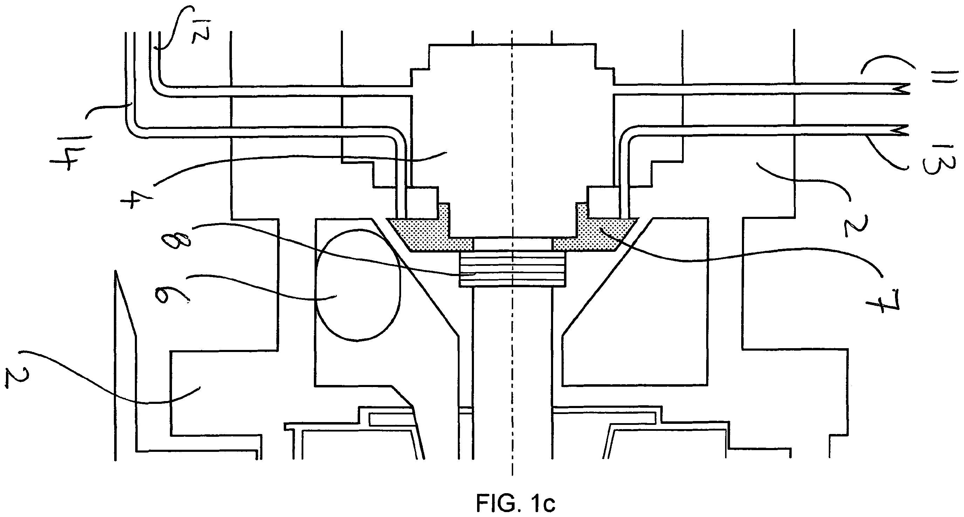

Figures 1 a and 1b illustrate preferred embodiments of the reaction pump. Figure 1b is a version of the reaction pump with shaft supported only from one side by one bearing and is otherwise identical in operation to the embodiment shown in Figure 1 a.

Referring to Figures 1a and 1b, in which like parts bear the same reference numerals, the reaction pump has a housing 2 which contains the components of the reaction pump. Figure 1 a shows the housing 2 with on either side shaft bearings 1 located out of reach of the process fluid or liquid which is contained in a central reaction chamber 9, 10. On either side, between the reaction chamber and the bearings are seal protection chambers 7 formed by partition walls or cowls and shaft surrounding throttle pipes 8, which act as a barrier to process fluid or liquid which could leak from the reaction chamber, along the shaft 15 under the extremely high temperatures and pressures under which the reaction chamber operates.

The shaft 15 is supported by two shaft bearings 1, and an impeller 3 is mounted on the shaft, inside the reaction chamber 9, 10. The reaction chamber is generally cylindrical, and blades of the impeller project outwardly from the mounting on the shaft to meet the inner edge of the reaction chamber.

The reaction pump has at least two blades; preferably there are between six and thirty blades; more preferably there are between twelve and twenty blades and most preferably there are sixteen blades, supported on the shaft.

The dimensions of the blades are selected according to type of material, throughput and other operating conditions. A blade is typically between 100mm and 2000mm in radial length, preferably between 200mm and 800mm in radial length and most preferably between 350mm and 450mm in radial length.

Blades are between 3mm and 100mm in thickness, preferably between 8mm and 20mm in thickness and most preferably 10mm and 12mm in thickness; and between 50mm and 2000mm in axial length, preferably 100mm and 800mm in axial length, most preferably 300mm and 500 mm in axial length.

The impeller is offset inside the reaction chamber, in the usual manner for a liquid-ring type implementation, so that the blades of the impeller and the edge of the reaction chamber form sub-chambers which vary in size as the impeller rotates, compressing the contents of the sub-chambers.

In this embodiment, the reaction chamber is divided by a rib 16 into first and second chambers 9 and 10. The hydrocarbon process fluid or liquid reactant is input via an inlet 5, and output via the outlet 6. Optionally catalyst may be introduced through the body of the rib so that it is

The inlet is provided to the first reaction chamber 9, and the outlet to the second reaction chamber 10. This means that the process fluid or liquid has to travel between the two reaction chambers during processing in order to exit the reaction pump; this increases residence time of the reactant in the chamber, which gives longer for the necessary reactions to take place, and more revolutions of the impeller to compress the reactant. The gap between the dividing rib 16 and the edge of the impeller blades can be made sufficient to allow transfer of fluid between the two chambers, but small enough to increase the residence time.

To prevent the reactant escaping the chamber along the shaft, the seal protection seal protection chamber 7 is provided on either side of the reaction chamber, between the reaction chamber and the bearings. In addition, a throttle pipe 8 is provided before the seal protection chamber 7 to provide further protection against leakage of solid contaminants or particles from the process fluid or liquid containing abrasive material. The seal protection chamber 7 is shown in greater detail in Figure 1 b.

The pressure in the seal protection chamber 7 is maintained at the same or slightly higher to the pressure inside the reaction chamber, so that the combination of this and the throttle helps to prevent reactant flowing through the throttle into the chamber 7. In moments of pressure change it can be possible for short moments that small amounts of reactant flow through the throttle pipe, but they mix themselves with the oil in the chamber 7 so that they are prevented from reaching the seals or bearings.

In use the reaction pump is driven by a drive means to angular speeds of between 300 RPM and 5000 RPM, preferably between 800 RPM and 1200 RPM and most preferably 1000 RPM.

In addition, as a further means for sealing and preventing leakages, each side of the reaction chamber, between the seal protection chamber 7 and the bearings, there is a seal chamber 4. The seal chambers 4 each house a sliding ring seal, suspended in oil, which provides secure sealing against leakage from the reaction chamber. Sliding ring seals themselves are known to the art, and essentially are a set of two rings, one moving and one stationary, that are pressed radially together, with a lubricant to allow the movement. In this embodiment, double-acting sliding ring seals are used. Single-acting seals could also be used, providing the sealing action in the direction of the reaction chamber.

The sliding ring seal(s) also, as in this embodiment, incorporate(s) a bellows, to allow for thermal expansion of the components (such as the shaft). The sliding ring seals used in this embodiment are also high-temperature type sliding ring seals, in order to cope with the high temperature environment close to the reaction chamber. The seal protection chambers 7 provide particular protection in this case, as without a means of preventing contamination, the ring seals can fail if reactant solids settle in bellow gaps, or when viscosity of the reactant is very high and gums the bellows mechanism.

In an embodiment, each seal chamber 4 houses a set of two sliding ring seals, one mounted at the junction of the seal chamber and the additional/protection seal protection chamber 7, and the other at the outer edge of the seal chamber.

The seal protection chambers 7 are provided with inlet 13 and outlet 14 channels to top up the oil, or to circulate the oil, or to refresh the oil should it become contaminated either with wear, or with small amounts of reactant (liquid or solids) leaking along the shaft from the reaction chamber.

The oil in these seal protection chambers 7 can therefore be supplied separately from the process fluid or liquid in the reaction chamber, and can be changed as necessary, so that the reactants cannot attack the sliding ring seal, or the bearings.

The chambers 7 may be filled with an alternative substance instead of oil, such as another fluid, or a semi-solid. Any alternative still provides the function of fluidically separating the bearings and/or the seal chamber from the reactant.

The sliding ring seal chamber is provided with cooling liquid inlet 11 and outlet 12 channels, in order to maintain the seal at a temperature below the high temperatures in the reaction chamber, and to cool the heat from friction with the components sealed. In this embodiment, the cooling liquid is also the lubricant (oil) for the sliding ring seal. The liquid circulated can be passed to and from a heat exchanger outside the reaction pump. The pressure of the seal chamber is maintained slightly higher than the pressure in the reaction chamber, to help ensure no oil from the seal protection chamber can reach the seal chamber.

It is therefore in part the seal protection chamber 7, formed by the partition walls and the throttle 8, which allows the use of a sliding ring seal, which requires a lubricant to function, because the sliding ring seal may otherwise itself experience failure and/or excessive wear if not protected from the reactant. The seal protection chamber 7 therefore protects the seals as well as the bearings. The walls of the reaction chamber and the seal protection chamber 7 are essentially shaped as a cowl, protecting the seal protection chamber.

The bearings 1 are situated outside the seal protection chamber 7 and seal chamber 4 combination, and therefore should be completely fluidically separated from the reaction chamber at all times, so that the reactant cannot attack the bearings and produce excessive wear on the bearings. The bearings can be lubricated by their own lubricant source, which need not be spare process fluid or liquid, but can be from a separate chamber in the housing next to the bearings. As the bearings are in a relatively cool part of the apparatus (due to separation from the reaction chamber) the lubricant can typically be a viscous liquid (such as grease). If oil is used or needed as lubrication, this can also be provided with inlet and outlet channels for circulation or for new oil as needed.

In an alternative embodiment, the housing can provide further sealing components between the reaction chamber and the bearings, in order to provide extra security against leakage. For example, a further bellows seal can be provided before or in addition to the throttle, in order to allow thermal expansion of the shaft. The bellows seal can be provided with a cowl to protect the seal and allow the expansion.

The size of the reaction chamber, and therefore of the impeller blades, in a given reaction pump according to the above embodiment can be varied according to the requirements of the system, and of the feedstock typically used. Typically a blade is between 100mm and 1000mm, preferably between 300mm and 500mm and most preferably 400mm in length, between 30mm and 400mm, preferably between 100mm and 200mm and most preferably 130mm in width, defined from the surface of the shaft to the blade tip and between 3mm and 60mm, preferably 10mm thick. Different thicknesses, for example, will require different drive capabilities, but will provide differing levels of emulsification, applied shear force and compression of the reactant.

If the connections to the reaction pump are optimized, the reaction can provide all of the following actions, some of which in previous reaction pumps were distributed to other reaction pumps in a system: pumping action, fine mixing, mechanical crushing, emulsification, heat input, low pressure area for the process liquid to pass through, pressurized zone for the process fluid or liquid to pass through, and cleavage of the molecular chains.

In common with previous reaction pumps, the heat input to the reaction is essentially provided by the action of the impeller, though the abrasive nature of the zeolite catalyst contributes. The temperature of the reaction chamber is maintained between 240°C and 400°C, preferably between 270°C and 320°C to allow cleavage of large hydro carbon chain compounds in the process fluid or liquid, resulting in middle distillate-type hydro carbon compounds which are later separated out of the process fluid or liquid mixture by evaporation.

The impeller can also be driven to provide the necessary pressure differentials across the reaction pump, in conjunction with the connections to the input and output components of the system, as described in more detail below. For example, the system can provide negative pressure to aspire process fluid or liquid mixture from the mixing vessel to the inlet, and positive pressure to pump the output reactant to the evaporation system.

These pressure differentials can also be used (in combination with vacuum pumps where necessary) to also drive consumed process fluid or liquid from the evaporation vessel back into the mixing vessel, and pump process fluid or liquid out of the process circuit to the settling tank.

A reaction pump of the type described above, operating in effect as a liquid ring pump, can be driven by an electronically governed internal combustion engine or by an electric engine adjustable by a frequency converter, to have a conversion capacity between 20ltr and 5000ltr per hour, preferably between 100l/h and 300l/h, operating at between 300RPM and 5000RPM, preferably between 700RPM and 1500RPM.

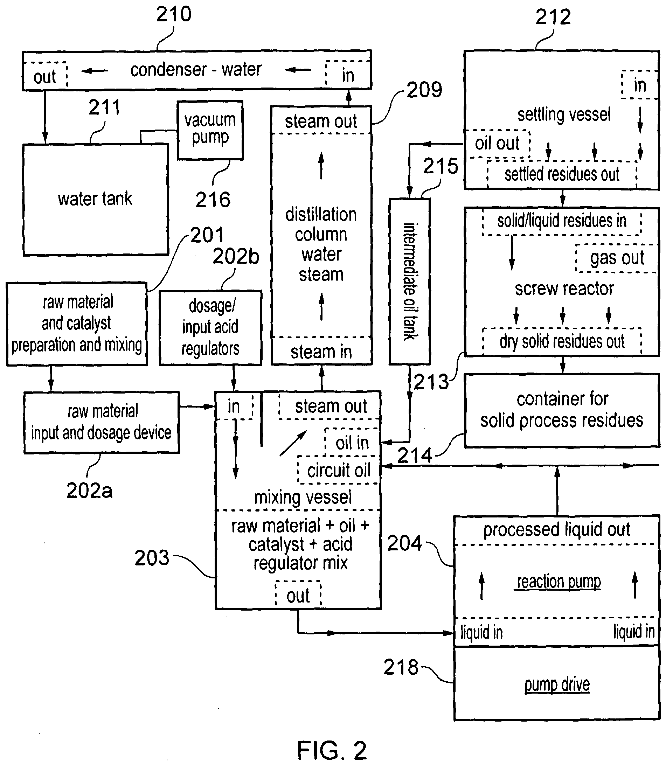

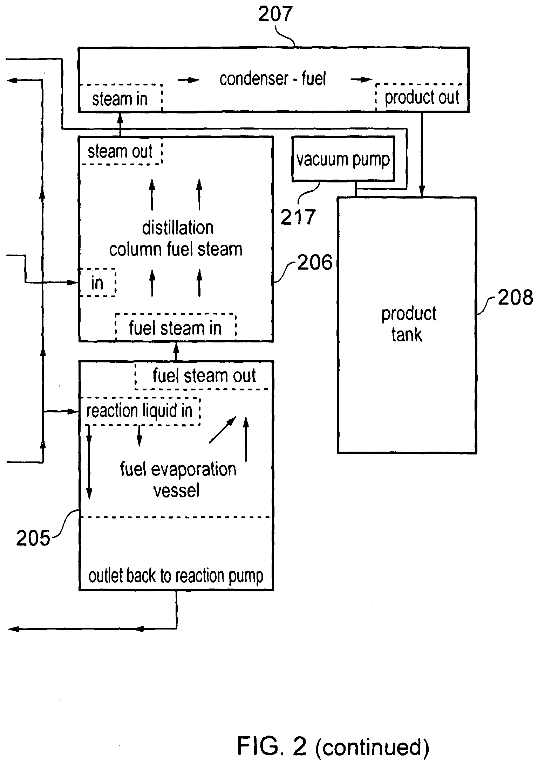

Figure 2 illustrates a hydrocarbon conversion system. Essentially the system includes a reaction pump according to the invention, for example of the type described above, with a pre-processing circuit and a post-processing collection circuit. There is also an intervening cleaning circuit for removing residual components from the process fluid or liquid.

An important issue in such reaction pumps is the extraction of process related remaining residues, which depending on feedstock type, usually have quantities between 2% - 10% of the entered feedstock volume per hour. Without a functional extraction system for process such residues, plant operation time is limited to a few hours because content of residual solids within the process fluid or liquid increases uncontrollably.

The system and method address this problem through an adapted system where during operation in certain intervals a part of the process fluid or liquid is brought out of the process circuit to pass through an independent cleaning and recycling circuit.

Following the reaction in the reaction pump, smaller hydrocarbon compounds evaporate and ascend out of the process fluid or liquid mixture to be converted into liquid fuel in the condenser. Adding the residual extraction and process oil recycling system enables uninterrupted operation of the transformation process; there is no longer system downtime while these residues are extracted in a separate cycle, or the process oil in one part of the system replaced.

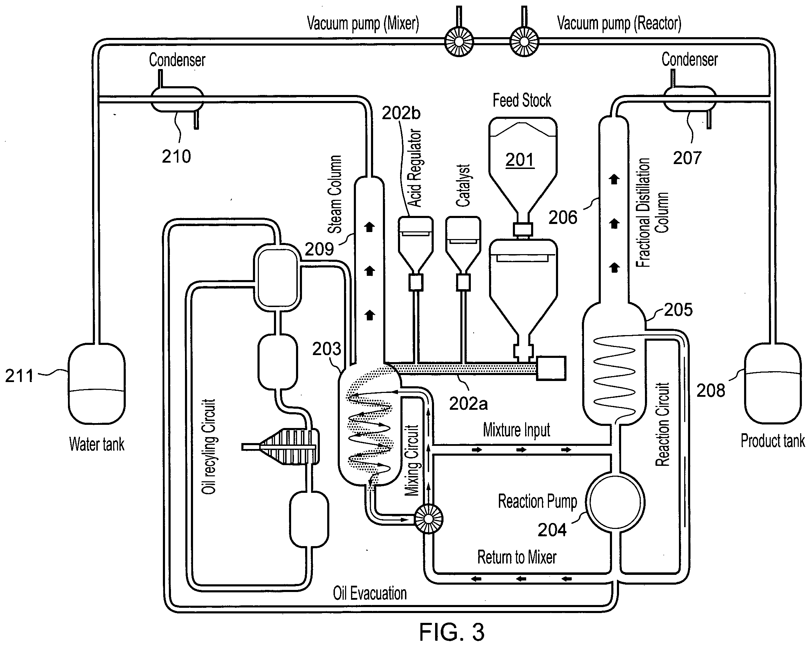

Figure 3 is a flow diagram of the system corresponding generally to that shown in Figure 2 and shows key components of the process and the direction of flow. Reference will be made to both Figures 2 and 3 in order to explain the method of hydrocarbon conversion.

The process works as a combination of the three fluid circuits adjusted to each other, to provide a thermal mechanical catalytic conversion process for continuous production of gaseous and liquid fuels. These are:
The first circuit 201, 202, 203, 209, 210, 211 in which the process fluid or liquid mixture is formed, by mixing oil between 100°C and 250°C, preferable at 150°C - 180°C, with raw materials from feedstock hopper 201 in feedstock pre-mixing tank 203 with catalyst and acid regulators, while extracting remaining water content from the feedstock through vaporisation, using condenser 210. Excess evaporated water is collected in a water tank 211, after having been directed through distillation column and condenser 210.

The second circuit 204, 205, 206, 207, 208, 217, 218 is where catalyst containing process fluid or liquid is heated, in a water free state. The catalyst containing process fluid or liquid mixture passes through the reaction pump, as herein described, and an evaporation vessel, where depending on the feedstock materials, at temperatures between 240°C and 400°C, preferably between 270°C and 320°C, the cleavage of the larger hydrocarbon chains and the evaporation of the emerging smaller hydrocarbon chain compounds takes place.

The third circuit 212, 213, 214, 215, is where continuous (or discrete) volumes of process liquid are cleaned and solid process residuals are removed therefrom. The remaining oil is recycled back into the system and the separated solid residuals are collected for disposal.

In such a system, consisting of three separate fluid circuits, and a reaction pump with rotating blades or vanes as herein described, continuous processing of raw material, cleavage of hydrocarbon chains, separation and liquefaction of resulting fuel vapours is achieved, while simultaneously permitting the extraction of process residuals to take place.

Heavy oil is used as a carrier medium. The process fluid or liquid is formed in the first circuit by the addition of raw materials, catalyst and acid regulators. The physical and chemical conditions for the mechanical catalytic decomposition of the hydrocarbon chains are achieved through the presence of zeolitic catalysts and the heating and emulsifying effect created by the rotating impeller inside the reaction pump.

Optionally catalyst may be introduced in a liquid or a gaseous state directly into the reaction chamber, so as to provide the catalyst in a suitable form for promoting effective and rapid conversion of the hydrocarbon.

Referring to Figures 2 and 3, the following components are included:
201 a raw material (feedstock) and catalyst preparing and mixing device - here the raw feedstock (hydrocarbon materials, such as plastics, organic matter) is mixed with the catalyst
202a raw material input and dosage device - a rotary feeder and/or a screw conveyor and knife gate valve, with electronically adjustable operation time intervals and input volumes for raw material/catalyst input into the mixing vessel 202b dosage and input conveyor for acid regulators
203 mixing vessel - with or without an agitator, showing on the upper side an inlet for feedstock materials and catalyst, an inlet for returning process fluid or liquid (circuit oil) from the reaction circuit, an inlet for recycled process oil, and an inlet for acid regulators, as well as an outlet for ascending water steam and on the lowest position an outlet from where the formed process fluid or liquid mixture can be aspired by the reaction pump
204 reaction pump - as described above, operating according to the principle of the liquid ring vacuum pump, driven (218) by an electronically governed internal combustion engine or by an electric engine adjustable by a frequency converter, having a conversion capacity between 20ltr and 5000ltr per hour, operating at number of revolutions between 300RPM and 5000RPM, preferably between 700RPM and 1500RPM.
205 evaporation vessel - with or without an agitator, showing on an upper side an inlet for process fluid or liquid coming in from the reaction pump, on a lowest position an outlet from where process fluid or liquid mixture can be aspired from the reaction pump and on the top an outlet for fuel steam ascending to the distillation column.
206 distillation column - for cleaning and sorting fuel ascending from the evaporation vessel.
207 condenser - to liquefy the middle distillate steam ascending from the distillation column.
208 product tank - to store the liquid fuel streaming down from the condenser.
209 distillation column - for cleaning the water steam generated by raw material input into the hot process fluid or liquid in the mixing vessel.
210 condenser - to liquefy water steam coming from the distillation column.
211 water tank - to collect water extracted from the raw material.
212 settling tank - for separation of solid process residuals and process oil by gravity, showing on an upper side an inlet for process liquid, in the middle area an outlet for the oil after solids have settled, and on a lowest point an outlet for the settled residual sludge to flow into a decanter separation system, a filter or a screw reactor.
213 decanter separation system, filter system and/or screw reactor - to separate the oil from the residual sludge and compress the remaining residuals, showing an inlet for the residual sludge coming from the settling tank, an outlet to direct oil steam to the distillation column 206 and an outlet for separated solid process residuals (which may be compressed) to be collected in the disposal container.
214 container - to collect the separated solid residual materials for disposal.
215 intermediate storage tank - for oil coming from settling tank before going back into the mixing vessel 203.
216 vacuum pump - to support the water- steam extraction, distillation and condensation.
217 vacuum pump - to support fuel- evaporation, distillation and condensation.
218 drive engine for the reaction pump.

The third circuit 212, 213, 214, 215 cleaning part of the processed fluid from the reaction pump 204 is one element allowing the uninterrupted processing - since the process fluid or liquid (other than that distilled off as the product) is being continually cleaned and recycled into the system, there is no need for periodic stopping of the operation of the system for removal of residues from the process fluid or liquid, or for replacement of the process fluid or liquid in certain components. In addition, optimal process fluid or liquid mixture parameters can be held during operation without time limitation.

The cleaning and recycling function of the third circuit also allows the system to keep the viscosity of the process fluid or liquid, which is an important process parameter, in a certain adjustable range. This leads to more stable and efficient operation, in contrast to previously considered systems in which viscosity would increase continually up to an excessive level, which would require stopping the process, replacing the process fluid or liquid, and starting it again with a lower viscosity in the system. For example it is the heat that is generated in the reaction pump, by the mixer, that cleans the impeller blades, rather than an external heating supply that can give rise to coking and build-up of materials that previously led to clogging of components and system failures.

In previous reaction pumps, the assumption was that it would be possible to provide an area in the main reaction circuit, where solid particles would settle down to be extracted out. However, for optimised process conditions, intense mixing and turbulences inside the reaction pump and reaction circuit are required for prevention of settlement, as well as a certain flow speed. Therefore the assumption to integrate a settlement area in the same process circuit contradicts itself.

Another component allowing uninterrupted processing is the reaction pump itself because, as described above, the bearings are protected from excessive wear, and therefore provide industry standard lifetimes avoiding the need for frequent reinstallation of bearings, stopping the processing.

The three circuits are matched by balancing the relative temperatures, pressures, and positions of the elements, in order to optimize the transit of the process fluid or liquid and other products and residuals throughout the system.

For example, the reaction pump 204 is driven 218 sufficiently to pump the process fluid or liquid into the evaporation vessel 205. The pump can also be driven sufficiently to aspire the output process fluid or liquid reactant from the mixing vessel 203 into the reaction pump for processing. These effects can be balanced by providing sufficient drive in the pump for either or both.

The pump can also be alternately used for aspiration of the process liquid mixture from the mixing circuit (or from the evaporation vessel), and then used for pumping process liquid mixture. The pumping action can alternate between pumping into the three options shown in Figure 2, the evaporation vessel 205, mixing vessel 203 or settlement tank 212 for residual extraction, or a combination of the three outlets can be regulated at set percentages, for example by valves.

In another example, the vessel levels and tube connections are arranged in relation to each other (by relative height in the system) so that gravity supports the fluid transportation tasks. Much of the process fluid or liquid movement through the system is therefore realized by the reaction pump. For example, the evaporation vessel 205 position which is higher than the reaction pump 204, so that at optimum process conditions gravity supports the process liquid exchange outlet back to the reaction pump.

A process plant based on the above system can be implemented in a modular fashion, by chaining processing elements such as shown in Figure 2, or using additional units of the reaction pump 204 and other components as necessary (providing the system balance is maintained) or simply duplicating the system, while providing common elements for components not involved directly in the process, such as the residual container. Plants of different sizes can therefore be constructed by combining adequate evaporation and condensation units with a corresponding number of individual reaction pump modules of a certain size (each of module consisting of a single reaction pump and a drive unit).

The rotary feeder 202a and dosage conveyor 202b should be air locked. Certain components, such as the reaction pump 204 and evaporation vessel 205 should be thermally insulated to increase efficiency.

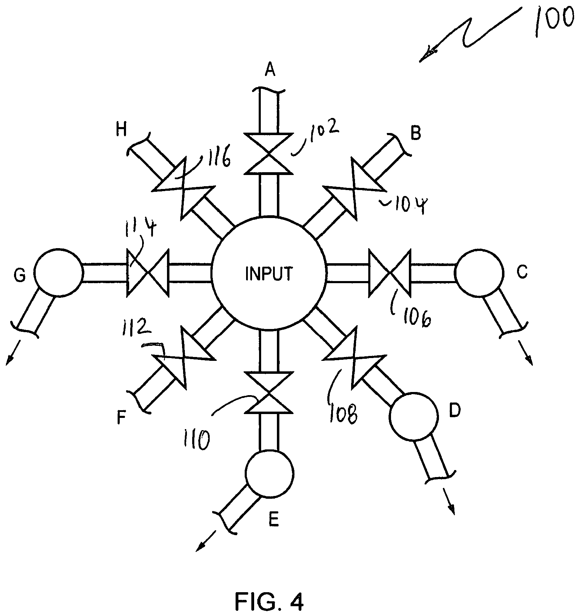

Referring to Figure 4 there is shown an overall view of a manifold 100 having a common input port and eight outlets ports A - H suitable for connection to up to eight reaction pumps. Material to be processed is delivered through main input manifold into four active reaction pumps C, D, E and G. Intermediate each outlet port and each reaction pump C, D, E and G, there are valves 102, 104, 106 and 108 which are capable of remote switching. This enables individual reaction pumps to be switched into circuit and out of circuit as and when needed, so facilitating maintenance and instruction.

The diagrammatic representation of a carousel valve system in which any number of reaction pumps (1 to 8) may be incorporated as part of a modular arrangement is for illustrative purposes only and the actual number of reaction pumps may be more or less. An advantage of this arrangement is that one or more reaction pumps may be removed for maintenance or cleaning, without having to stop the overall hydrocarbon conversion process.

Thus for example the input of the carousel valve system 100, shown in Figure 4 may be located in the position of the reaction pump shown as 203 in Figure 3. Suitable connections (not shown) need to be made from the output of the four reaction pumps C, D, E and G to the reaction fluid or liquid feed and return circuits. Valves 102 to 116 are controlled to open into and out of circuit so switching reaction pumps C, D, E and G on line or isolating them according to load and throughput requirements. Likewise it is understood that reaction pumps C, D, E and G may be isolated and removed from the system when requiring repair or maintenance.

Variation to the aforementioned reaction pump may be made without departing from the scope of the invention. For example, a remote monitoring and/or status updating system may be included as part of the overall control and monitoring system for use with the pump or any system including the reaction pump. Likewise individual reaction pumps may be fitted with tamper evident devices so that if they are opened by unauthorised persons any guarantee on the pumps or system may be revoked.

Other variations include the possibility of using remote monitoring and on-line real-time management for the purposes of obtaining data as to optimum conditions, controlling throughput, operation and maintenance.

## Claims

1. A reaction pump for thermal conversion of hydrocarbons, comprising:
a housing (2);
a reaction chamber (9, 10) enclosed by the housing (2), for containment of a hydrocarbon process fluid or liquid reactant;
a mixing element (3) disposed inside the reaction chamber (9, 10) for transferring energy to the fluid reactant, the mixing element (3) coupled to a rotatable shaft (15);
at least one bearing (1) receiving the shaft (15), the or each, bearing (1) being disposed outside the reaction chamber (9, 10); and
a barrier means, disposed between the reaction chamber (9, 10) and the at least one bearing (1), for fluidically separating the reactant from the at least one bearing (1), wherein the barrier means comprises a seal protection chamber (7) disposed between the reaction chamber (9, 10) and the at least one bearing (1),
**characterized in that**
the barrier means further comprises a high-temperature type sliding ring seal enclosing the shaft (15), said sliding ring seal being disposed between the seal protection chamber (7) and the closest bearing (1) to the reaction chamber (9, 10) and comprising a bellows to allow for thermal expansion of the shaft (15); and
the seal protection chamber (7) contains a liquid which is in fluid communication with the reaction chamber (9, 10).

2. A reaction pump according to claim 1 wherein the seal protection chamber (7) comprises inlet and outlet channels (13, 14) for circulating liquid in the seal protection chamber (7).

3. A reaction pump according to any preceding claim including a means, such as a pressure vessel or pump, for varying the liquid pressure within the seal protection chamber (7).

4. A reaction pump according to any preceding claim wherein the barrier means comprises a throttle (8) enclosing the shaft (15), the throttle (8) being disposed between the seal protection chamber (7) and the reaction chamber (9, 10).

5. A reaction pump according to any preceding claim, wherein the reaction chamber (9, 10) is divided into two sub-chambers (9, 10), the first sub-chamber (9) comprising an inlet (5) for receiving reactant entering the reaction pump and the second sub-chamber (10) comprising an outlet (6) for expelling processed reactant.

6. A reaction pump according to claim 5 wherein the mixing element (3) is an impeller (3) and wherein a rib (16) is supported on an inner surface of the reaction chamber (9, 10) and is located intermediate the two sub-chambers (9, 10), the rib (16) has a diameter larger than the diameter of the impeller (3) and the centre of the circle defining the rib (16) is offset from the axis of the reaction chamber (9, 10) so that the rib (16) extends in an eccentric around the an inner wall of the chamber (9, 10).

7. A reaction pump according to claim 6 wherein a means, in particular a conduit passing through the material defining the rib (16), is provided for introducing liquid, or gaseous, catalyst into the reaction chamber (9, 10), under pressure, at or near the annular rib (16).

## Patentansprüche

1. Reaktionspumpe zur thermischen Umwandlung von Kohlenwasserstoffen, umfassend:
ein Gehäuse (2);
eine von dem Gehäuse (2) umschlossene Reaktionskammer (9, 10) zur Aufnahme eines Kohlenwasserstoff-Prozessfluids oder flüssigen Reaktanten;
ein in der Reaktionskammer (9, 10) angeordnetes Mischelement (3) zum Übertragen von Energie auf den flüssigen Reaktanten, wobei das Mischelement (3) mit einer drehbaren Welle (15) gekoppelt ist;
mindestens ein Lager (1), das die Welle (15) aufnimmt, wobei das oder jedes Lager (1) außerhalb der Reaktionskammer (9, 10) angeordnet ist; und
ein Barrieremittel, das zwischen der Reaktionskammer (9, 10) und dem mindestens einen Lager (1) angeordnet ist, zum fluidischen Trennen des Reaktanten von dem mindestens einen Lager (1), wobei das Barrieremittel eine zwischen der Reaktionskammer (9, 10) und dem mindestens einen Lager (1) angeordnete Dichtungsschutzkammer (7) umfasst,
**dadurch gekennzeichnet, dass**
das Barrieremittel weiter eine die Welle (15) umgebende Hochtemperatur-Gleitringdichtung umfasst, wobei die Gleitringdichtung zwischen der Dichtungsschutzkammer (7) und dem am dichtesten bei der Reaktionskammer (9, 10) befindlichen Lager (1) angeordnet ist und einen Balg umfasst, um eine thermische Ausdehnung der Welle (15) zuzulassen; und
die Dichtungsschutzkammer (7) eine Flüssigkeit enthält, die in Fluidverbindung mit der Reaktionskammer (9, 10) steht.

2. Reaktionspumpe nach Anspruch 1, wobei die Dichtungsschutzkammer (7) einen Einlass- und einen Auslasskanal (13, 14) zum Zirkulieren von Flüssigkeit in der Dichtungsschutzkammer (7) umfasst.

3. Reaktionspumpe nach einem der vorstehenden Ansprüche, welche ein Mittel, wie etwa ein Druckgefäß oder eine Pumpe, zum Variieren des Flüssigkeitsdrucks in der Dichtungsschutzkammer (7) beinhaltet.

4. Reaktionspumpe nach einem der vorstehenden Ansprüche, wobei das Barrieremittel eine die Welle (15) umgebende Drossel (8) umfasst, wobei die Drossel (8) zwischen der Dichtungsschutzkammer (7) und der Reaktionskammer (9, 10) angeordnet ist.

5. Reaktionspumpe nach einem der vorstehenden Ansprüche, wobei die Reaktionskammer (9, 10) in zwei Teilkammern (9, 10) unterteilt ist, wobei die erste Teilkammer (9) einen Einlass (5) zur Aufnahme von in die Reaktionskammer eintretendem Reaktanten umfasst und die zweite Teilkammer (10) einen Auslass (6) zum Ausstoß von behandeltem Reaktanten umfasst.

6. Reaktionspumpe nach Anspruch 5, wobei das Mischelement (3) ein Impeller (3) ist und wobei eine Rippe (16) an einer Innenfläche der Reaktionskammer (9, 10) getragen wird und sich zwischen den zwei Teilkammern (9, 10) befindet, wobei die Rippe (16) einen Durchmesser aufweist, der größer als der Durchmesser des Impellers (3) ist und das Zentrum des die Rippe (16) definierenden Kreises von der Achse der Reaktionskammer (9, 10) versetzt ist, sodass sich die Rippe (16) in einer exzentrischen Anordnung um die eine Innenwand der Kammer (9, 10) erstreckt.

7. Reaktionspumpe nach Anspruch 6, wobei ein Mittel, insbesondere eine Leitung, die durch das die Rippe (16) definierende Material hindurch verläuft, vorgesehen ist, um flüssigen oder gasförmigen Katalysator unter Druck, an oder nahe der ringförmigen Rippe (16), in die Reaktionskammer (9, 10) einzubringen.

## Revendications

1. Pompe à réaction pour la conversion thermique d'hydrocarbures, comprenant :
un logement (2) ;
une chambre de réaction (9, 10) enfermée dans le logement (2), pour contenir un réactif fluide ou liquide de traitement d'hydrocarbure ;
un élément de mélange (3) disposé à l'intérieur de la chambre de réaction (9, 10) pour transférer de l'énergie au réactif fluide, l'élément de mélange (3) étant couplé à un axe rotatif (15) ;
au moins un palier (1) recevant l'axe (15), le ou chaque palier (1) étant disposé à l'extérieur de la chambre de réaction (9, 10) ; et
un moyen de barrière, disposé entre la chambre de réaction (9, 10) et le au moins un palier (1), pour séparer de manière fluide le réactif du au moins un palier (1), dans laquelle le moyen de barrière comprend une chambre de protection de joint (7) disposée entre la chambre de réaction (9, 10) et le au moins un palier (1),
**caractérisée en ce que**
le moyen de barrière comprend en outre un joint annulaire glissant de type haute-température enfermant l'axe (15), ledit joint annulaire glissant étant disposé entre la chambre de protection de joint (7) et le palier (1) le plus proche de la chambre de réaction (9, 10) et comprenant un soufflet pour permettre une dilatation thermique de l'axe (15) ; et
la chambre de protection de joint (7) contient un liquide qui est en communication fluide avec la chambre de réaction (9, 10).

2. Pompe à réaction selon la revendication 1 dans laquelle la chambre de protection de joint (7) comprend des canaux d'entrée et de sortie (13, 14) pour faire circuler du liquide dans la chambre de protection de joint (7).

3. Pompe à réaction selon l'une quelconque des revendications précédentes incluant un moyen, tel qu'un récipient à pression ou une pompe, pour faire varier la pression de liquide à l'intérieur de la chambre de protection de joint (7).

4. Pompe à réaction selon l'une quelconque des revendications précédentes dans laquelle le moyen de barrière comprend un étranglement (8) enfermant l'axe (15), l'étranglement (8) étant disposé entre la chambre de protection de joint (7) et la chambre de réaction (9, 10).

5. Pompe à réaction selon l'une quelconque des revendications précédentes, dans laquelle la chambre de réaction (9, 10) est divisée entre deux sous-chambres (9, 10), la première sous-chambre (9) comprenant une entrée (5) pour recevoir un réactif entrant dans la pompe à réaction et la seconde sous-chambre (10) comprenant une sortie (6) pour expulser le réactif traité.

6. Pompe à réaction selon la revendication 5 dans laquelle l'élément de mélange (3) est une turbine (3) et dans laquelle une arête (16) repose sur une surface interne de la chambre de réaction (9, 10) et est localisée entre les deux sous-chambres (9, 10), l'arête (16) a un diamètre plus grand que le diamètre de la turbine (3) et le centre du cercle définissant l'arête (16) est décalé de l'axe de la chambre de réaction (9, 10), de sorte que l'arête (16) s'étend de manière excentrique autour de la une paroi interne de la chambre (9, 10).

7. Pompe à réaction selon la revendication 6 dans laquelle un moyen, en particulier une conduite passant à travers le matériau définissant l'arête (16), est fourni pour introduire un catalyseur liquide, ou gazeux, dans la chambre de réaction (9, 10), sous pression, au niveau ou à proximité de l'arête annulaire (16).
